Europäisches Patentamt

European Patent Office

Office européen des brevets

(11) Veröffentlichungsnummer: **0 538 581 A1**

## (12) EUROPÄISCHE PATENTANMELDUNG

(21) Anmeldenummer: **92114119.8**

(22) Anmeldetag: **19.08.92**

(51) Int. Cl.$^5$: **C08L 95/00**

(30) Priorität: **29.08.91 DE 4128640**

(43) Veröffentlichungstag der Anmeldung:
**28.04.93 Patentblatt 93/17**

(84) Benannte Vertragsstaaten:
**AT BE CH DE DK ES FR GB IT LI NL SE**

(71) Anmelder: **RÖHM GMBH**
**Kirschenallee**
**W-6100 Darmstadt(DE)**

(72) Erfinder: **Omeis, Jürgen, Dr.**
**Ernst-Ludwig-Weg 48A**
**W-6101 Bickenbach(DE)**
Erfinder: **Müller, Michael Dr.**
**Pater-Delp-Strasse 36**
**W-6140 Bensheim 3(DE)**
Erfinder: **Pennewiss, Horst, Dr.**
**De-La-Fosse-Weg 21**
**W-6100 Darmstadt(DE)**

(54) **Alkyl(meth)acrylat-Maleinsäureanhydrid Copolymer-modifiziertes Bitumen.**

(57) Die Erfindung beschreibt Polymer-modifizierte bituminöse Zusammensetzungen mit einem Gehalt von 0,5 bis 50 Gew.-% an Polymerbestandteilen, wobei 20 bis 100 Gew.-% des Polymerzusatzes ein Copolymer ist, das in Anteilen von 80 bis 99,9 Gew.-% aus $C_6$- bis $C_{28}$-Alkyl(meth)acrylaten und in Anteilen von 0,1 bis 20 Gew.-% aus Maleinsäureanhydrid und in Anteilen von 0 bis 19,9 Gew.-% aus weiteren polymerisierbaren Verbindungen aufgebaut ist.
Die so zusammengesetzten Polymer-modifizierten Bitumina zeichnen sich durch eine sehr gute und dauerhafte Homogenität aus, haben hohe elastische Rückstellungen und gute Plastizitätsspannen.

EP 0 538 581 A1

*Gebiet der Erfindung*

Die Erfindung betrifft Polymere auf Polyalkyl(meth)acrylat-Basis als Bitumenverbesserungsmittel und mit solchen Polymeren modifizierte Bitumina (PmB) mit verbesserten technischen Eigenschaften.

*Stand der Technik*

Bitumen, das ein Gemisch von im wesentlichen verschiedenen Kohlenwasserstoffen, mit schwankenden Anteilen an paraffinischen, naphthenischen und aromatischen Kohlenwasserstoffen ist, wird aufgrund seiner Eigenschaften vielfältig verwendet, so für die Herstellung von Straßenbelägen, als Vergußmassen, als Anstriche, im Bautenschutz oder in Form von Dachpappen sowie als Abdichtungsmittel gegen Grundwasser.

Infolge der spezifischen Produkteigenschaften - Bitumina besitzen in Abhängigkeit von der Rohölprovenienz nur geringe bis gar keine elastischen Eigenschaften - verspröden damit hergestellte Beläge bei niedrigen Temperaturen und erweichen bei höheren Temperaturen.

Durch Zusatz verschiedener Additive, insbesondere von Polymeren, wird versucht, eine Vergütung der Bitumina, insbesondere eine Verbesserung der rheologischen Eigenschaften zu erreichen, die z.B. dem Asphalt, einem Bitumen-Mineralstoff-Gemisch, der besonders für den Straßenbau verwendet wird, eine ausreichende Stabilität und Kälteflexibilität sowie eine hohe Dauerfestigkeit bei ständig steigenden Verkehrsbelastungen geben sollen. So kann der Polymerzusatz die sogenannte Plastizitätsspanne, d.i. die Differenz zwischen Erweichungspunkt und Brechpunkt, vergrößern. Eine Absenkung des Brechpunktes (DIN 52 012) und eine Erhöhung der Duktilität (DN 52 013) durch Polymerzusatz zeigen bessere Kälteflexibilität an. Der Zweck der Polymeren als Bitumenadditive ist die Veränderung des elastoviskosen Verhaltens von Bitumen, das heißt, die Erweiterung seiner Plastizitätsspanne und Verbesserung der elastischen Rückstellung.

Neben Natur- und Synthesekautschuken wurden als Polymere, Duroplastharze und Thermoplaste als Bitumenverbesserer geprüft (Körner et al. Plaste und Kautschuk 24 (1977), 475 bis 478). Als Polymer-Bitumenzusätze werden derzeit vor allem Styrol/Butadien (SB)-, EPDM- und Ethylen/Vinylacetat (EVA)-Copolymere und insbesondere für Industriebitumen auch ataktisches Polypropylen technisch verwendet. Marktgängige polymermodifizierte Bitumina sind u.a. Caribit ® (SB, Shell), Olexobit ® (EPDM, BP), Styrelf ® (SB, Elf).

Auch Polymere auf Acrylsäureester- und Methacrylsäureester-Basis, insbesondere Polymere von Alkylmethacrylsäureestern (PAMA) sind als Bitumenverbesserungsmittel beschrieben. Eine breitere technische Verwendung haben diese Polymeren, trotz guter Erfüllung eine Reihe gestellter Anforderungen als Zusätze, vor allem wegen unzureichender Verbesserung der elastischen Rückstellung gebrauchsfertiger elastomermodifizierter Bitumina, bisher nicht gefunden.

So beschreibt die US-Patentschrift 2 420 082 bituminöse Mischungen aus Bitumen und 2 bis 5 % Poly-$C_8$-$C_{10}$-alkylmethacrylaten, ohne spzeifische Angaben zu deren Molekulargewichten, wodurch die Duktilität des Bitumen verbessert wird.

Die US-Patentschrift 2 828 429 offenbart durch Zusatz von je 0,01 bis 0,5 % Kautschuk und Poly-$C_8$-$C_{24}$-alkyl(meth)acrylaten erhaltene bituminöse Mischungen mit verbesserter Duktilität. Die PAMA's haben Molekulargewichte von 5 000 bis 500 000.

Die deutschen Patentschriften DE-AS 12 40 773 und DE-OS 23 31 727 beschreiben ebenso mit Polymeren von Alkylmethacrylaten, ohne nähere und spezifische Angaben über diese Polymeren zu machen, verbesserte bituminöse Bindemittel für Straßendecken.

Weiter werden Polyalkyl(meth)acrylate bzw. Copolymerisate von Alkyl(meth)acrylaten als Bitumenverbesserungsmittel vorgeschlagen, in der DE-OS 25 09 473 ein bei Normaltemperatur festes, nicht klebriges Mischpolymerisat mit Molekulargewichten von 50 000 bis 500 000, das im wesentlichen aus Alkyl(meth)-acrylaten mit Alkylgruppen, die mehr als 6 C-Atome enthalten, sowie aus 3 bis 20 Gew.-% Acrylsäure oder Methacrylsäure und aus 3 bis 20 Gew.-% basischen Stickstoff-haltigen Monomeren aufgebaut ist, und dazu in den deutschen Patentschriften DE-A 39 17 816 und DE-A 39 25 827 solche, die vorteilhafterweise unter 2,8 Gew.% einpolymerisierte Carbonsäuren und unter 2,8 Gew.-% einpolymerisierte basische Stickstoffverbindungen enthalten.

Aus der japanischen Patent-Offenlegungsschrift 52-141 829 sind stufenweise emulsionspolymerisierte Zusätze und aus der WP 88/07 067 Poly-$C_4$-$C_{20}$-Alkylmethacrylate mit Molekulargewichten von etwa 5 000 bis etwa 1 000 000 bekannt, die in Mengen von 0,01 bis etwa 10 Gew.-% in dem modifizierten Bitumen enthalten sind. Poly-$C_8$-bis-$C_{26}$-alkyl(meth)acrylate mit Molekulargewichten Mw > $10^6$ sind als Bitumen-modifizierende Polymere aus der DE-A 39 17 815 bekannt.

Olefinische Copolymere, vor allem mit Acrylsäure bzw. Methacrylsäure als reaktionsfähigen Comonomeren

2

aufgebaut, sind als Zusätze von bituminösen Stoffen in der deutschen Auslegeschrift 11 88 807 und in WP 87/04 174 beschrieben. Hierzu sind noch aus der japanischen Patentschrift JP 62-79268 Copolymere von Isobutylen und/oder Styrol und/oder niederen Acrylsäureestern mit Maleinsäure oder deren Anhydrid bekannt.

Ionisch vernetzte, weitgehend homogen verteilte Poly(meth)acrylatsysteme in Bitumina lassen sich nach der deutschen Patentanmeldung P 40 06 499.9 zweistufig durch Einarbeiten Säuregruppen-haltiger Polymerer und anschließendes Einarbeiten reaktiver Metallverbindungen erhalten. Bitumina, die kovalent vernetzte, homogen verteilte Poly(meth)acrylatsysteme enthalten, sind in der deutschen Patentanmeldung P 40 40 234.7 beschrieben.

Voraussetzungen an die polymeren Additive für die technische Nutzung der Eigenschaftsverbesserungen in bituminösen Gemischen sind Oxidations- und Thermostabilität der Polymeren, ihre leichte Einarbeitbarkeit in Bitumen, die Kompatibilität mit unterschiedlichen Bitumensorten und die Stabilität der Bitumen-Polymer-Mischung über längere Zeiträume und bei erhöhten Temperaturen.

Die bekannten polymeren Bitumenadditive erweitern in ausreichendem Maße die Plastizitätsspanne in bituminösen Gemischen und in damit hergestellten Mineralabmischungen, d.h. Erweichungspunkt und Brechpunkt solcher Materialien werden vielfach durch die bekannten Polymerzusätze günstig beeinflußt.

Hohe Dauerfestigkeit und Elastizität der mit bituminösen Bindemitteln hergestellten Asphalte, welche durch die elastischen Eigenschaften der Bitumina bestimmt werden, sind, wie beispielsweise in der Praxis zum Teil stark verformte Asphalt-Straßendecken zeigen, in noch nicht genügenden bzw. guten Maßen vorhanden.

Von Nachteil ist insbesondere die Tatsache, daß mit den Bitumenadditiven des Standes der Technik in zahlreichen Bitumensorten bei der Heißlagerung Entmischungen in polymerreiche und polymerarme Phasen auftreten, d.h., daß die entsprechenden PmB nicht homogen bleiben und nicht lagerstabil sind.

Die Technik verlangt in besonderem Maße Bitumenadditive, die mit den verschiedensten Bitumentypen und -sorten verträglich sind und folglich universell eingesetzt werden können.

Aufgabe und Lösung

Es war die Aufgabe, homogene und langzeitstabile und nach Heißlagerung homogene, mit Poly(meth)-acrylaten polymermodifizierte Bitumina (PmB) zu erhalten, die mit ihren mechanischen und thermischen Eigenschaften ein gutes technisches Verhalten zeigen, und vor allem war es die Aufgabe eine praktisch für alle Bitumensorten homogene Poly(meth)acrylat Polymermodifzierung mit hohen technischen Erwartungen zu finden.

Es wurde überraschenderweise gefunden, daß mit Maleinsäureanhydrid als Comonomerem enthaltenden Polyalkyl(meth)acrylaten bestimmter Zusammensetzungen gute und vor allem dauerhafte Homogenität aufweisende, d.h. bei der Heißlagerung sich nicht entmischende PmB hergestellt werden können, in denen sowohl die elastischen als auch die thermischen Eigenschaften des Bitumens und damit bituminöser Zusammensetzungen deutlich verbessert sind und welche die Praxisanforderungen gut erfüllen.

Überraschend ist, daß mit Copolymerisaten von langkettigen Alkyl(meth)acrylsäureestern und Maleinsäureanhydrid, das sind mit Maleinsäureanhydrid als Comonomeren modifizierte PAMA's, wie sie beispielsweise aus dem WP 88/07 067 und der DE-A 39 17 825 als Bitumen-modifizierende Polyalkyl(meth)acrylate beschrieben sind, PmB mit sehr guten und stabil bleibenden Homogenitäten, das sind, gegenüber den bekannten, reine PAMA enthaltenden PmB, wesentliche Homogenitätsverbesserungen, erhalten werden. Im Vergleich zu den im Stand der Technik genannten ionisch oder kovalent vernetzten und homogen verteilten Poly(meth)acrylatsystemen in Bitumina, zeichnet sich der erfindungsgemäße Bitumen-Polymerzusatz durch seinen relativ einfachen Aufbau und seine einfache Anwendung aus.

Gegenstand der Erfindung ist danach:

Homogenes, d.h. gegen Entmischung bei der Heißlagerung stabiles polymermodifiziertes Bitumen mit hoher elastischer Rückstellung, guter Kälteflexibilität und hoher thermischer Stabilität, mit einem Gehalt von 0,5 bis 50 Gew.-% an Polymerbestandteilen, wobei diese Polymerbestandteile mindestens zu 20 Gew.-% Polyalkyl(meth)acrylate sind,
dadurch gekennzeichnet,
daß das Polyalkyl(meth)acrylat in Anteilen von 80 bis 99,9 Gew.-% aus $C_6$- bis $C_{28}$-Alkyl(meth)acrylaten, in Anteilen von 0,1 bis 20 Gew.-% aus Maleinsäureanhydrid und in Anteilen von 0 bis 19,9 Gew.-% aus einer oder mehreren anderen Verbindungen mit nicht mehr als einer polymerisierbaren Doppelbindung, aufgebaut und in dem Bitumen gleichmäßig verteilt ist.

Die Molekulargewichte Mw der $C_6$- bis $C_{28}$-Alkyl(meth)acrylat-Maleinsäureanhydrid-Copolymerisate liegen vorteilhaft bei $\geq$ 30 000 bis etwa $1,5 \times 10^6$.

Die Mitverwendung von Maleinsäureanhydrid-Olefin-Copolymeren wirkt sich weiter günstig auf die mechanischen Eigenschaften der PmB aus.

Die Alkyl(meth)acrylatcopolymerisate und/oder auch Gemische von Copolymerisaten der erfindungsgemäßen Zusammensetzungen können sowohl als Lösung, z.B. in einem geeigneten Mineralöl, oder in reiner Form dem Bitumen oder bituminösen Gemisch zugesetzt werden.

Zwar läßt sich, wie aus dem Stand der Technik bekannt, durch Zusatz von Polyalkyl(meth)acrylaten, welche Molekulargewichte im Bereich von etwa 50 000 bis etwa 1 000 000 haben, in polymermodifizierten Bitumina die Kälteflexibilität, was in den Kenndaten von Brechpunkt und Duktilität zum Ausdruck gebracht wird, verbessern, in nicht ausreichendem Maße jedoch die elastische Rückstellung und auch nicht die Homogenität, wodurch in verarbeiteten Bitumenmassen bleibende Verformungen, z.B. in Abdichtringen oder in Straßenbelägen, hingenommen werden müssen, die ihrerseits hohe, beispielsweise verkehrssicherheitstechnische, Risiken in sich bergen. Die deutsche Spezifikation der technischen Lieferbedingungen für gebrauchsfertige polymermodifizierte Bitumen, TI PmB 88, Teil 1, Fassung vom 30.12.1988, stellt an die verschiedenen PmB-Sorten Anforderungen an die elastische Rückstellung von mindestens 50 %.

Zum Nachweis der elastischen Eigenschaften gebrauchsfertiger elastomermodifizierter Bitumen wird die Prüfung der elastischen Rückstellung (ER) nach dem Halbfadenverfahren im Duktilometer wie folgt in Anlehung an DIN 52 013 bei 25 Grad C durchgeführt:

Abweichend von DIN 52 013 werden die Probekörper nur bis zu einer Fadenlänge von 20 cm ausgezogen und der Faden nach Arretierung des Vorschubs innerhalb 10 s mit einer Schere in Fadenmitte in zwei Halbfäden getrennt. Die elastische Rückstellung ist definiert als der Abstand, der sich nach 30 min zwischen den beiden Halbfäden einstellt. Sie wird angegeben in %, bezogen auf die Ausgangsdehnung.

Zum Nachweis der Homogenität wird die Stabilität gegen Entmischung bei Heißlagerung gebrauchsfertiger polymermodifizierter Bitumen nach folgendem Untersuchungsgang, dem sogenannten Tubenverfahren (TI PmB) bestimmt:

Etwa 75 g polymermodifiziertes Bitumen werden blasenfrei in eine unlackierte Aluminiumtube von 3 cm Durchmesser und 16 cm Zylinderhöhe bis zu 2/3 ihrer Höhe eingegossen. Ehe das Prüfgut ganz erkaltet ist, wird das offene Tubenende so zusammengedrückt und mehrfach dicht verfalzt, daß keine Luft eingeschlossen wird. Die so luftfrei und luftdicht verschlossene Tube wird senkrecht stehend 3 Tage bei 180 Grad C gelagert.

Nach dem Abkühlen auf Zimmertemperatur wird die Tube mit geeigneten Verfahren so weit abgekühlt, bis das Prüfgut aus dem Aluminiummantel geschält werden kann.

Der Prüfling wird nach der Höhe gedrittelt. An den unteren und oberen Probenteilen werden die Erweichungspunkte Ring und Kugel (RuK-EP, DIN 52 011) bestimmt.

Abweichend von DIN 52 011 wird für die Erweichungsbestimmung die verfügbare Probemenge von jeweils 25 g Bitumen für ausreichend angesehen.

Ein PmB ist stabil gegen Entmischung zu beurteilen, wenn die Differenz des RuK-EP des oberen und unteren Drittels kleiner als 2 K beträgt.

Die Beispiele mit Vergleichswerten nach dem Stand der Technik belegen die hohen elastischen Rückstellungen und die hohen Homogenitäten, d.h. gute Lagerstabilitäten in den erfindungsgemäßen PmB (Zusammenstellung der Meßmethoden und der Wertetabellen in Teil B der experimentellen Ausführungen).

Der Aufbau der erfindungsgemäßen Copolymerzusätze mit (Meth)acrylsäureestern gewährt gute Löslichkeit, d.h. auch leichte Einarbeitbarkeit in praktisch allen Bitumensorten und gute Kälteflexibilität sowie gute Oxidationsbeständigkeit der erfindungsgemäßen PmB. Die neuen PmB zeichnen sich weiter durch hohe Duktilitätswerte und breite Plastizitätsspannen, das sind die Temperaturdifferenzen zwischen Brechpunkt und Erweichungspunkt durch Ring und Kugel, aus.

Durchführung der Erfindung

Für die Herstellung der erfindungsgemäß zu verwendenden (Meth)acrylsäurealkylestercopolymerisate werden langkettige Alkylester der Acrylsäure und/oder vor allem der Methacrylsäure mit $C_6$- bis $C_{28}$-, insbesondere mit $C_8$-bis $C_{20}$-Alkylresten, vorteilhaft mit $C_{10}$- bis $C_{18}$-Alkylresten in der Estergruppe als Monomere verwendet.

Beispiele für solche Ester sind n-Hexylmethacrylat, n-Octylmethacrylat, 2-Ethylhexylacrylat, 2-Ethylhexylmethacrylat, n-Decylmethacrylat, Isodecylacrylat, Isodecylmethacrylat, Dodecylmethacrylat, Octadecylacrylat, Octadecylmethacrylat, Eicosylmethacrylat, Tricosylmethacrylat, wobei die für die Esterherstellung verwendeten langkettigen Alkohole bevorzugt als synthetische Alkohole eingesetzt werden, und welche meist Gemische verschiedener Alkohole, insbesondere im $C_8$- bis $C_{26}$-Bereich darstellen. Solche Alkohole sind im Handel beispielsweise unter den Markennamen Lorol ®, Alfol ®, Dobanol ®, Behenyl-SR ® bekannt. Ein beispielsweise für die Herstellung von Isodecylmethacrylat brauchbarer technischer Alkohol ist ein Gemisch aus isomeren Isodecylalkoholen mit einer mittleren C-Zahl (C) = 9,9 - 10,3.

Die erfindungsgemäßen Bitumen-modifizierenden, Maleinsäureanhydrid als Comonomer enthaltenden Polyalkyl(meth)acrylate sind aus 80 bis 99,9 Gew.-%, vor allem aus 90 bis 99,5 Gew.-% und insbesondere aus 95 bis 99 Gew.-% der langkettigen $C_6$ bis $C_{28}$-Alkylester der Acrylsäure und/oder vor allem der Methacrylsäure aufgebaut, wobei diese vorteilhaft Gemische verschiedener $C_6$- bis $C_{28}$-Alkylester sind.

Das Comonomere Maleinsäureanhydrid ist in Mengen von 0,1 bis 20 Gew.-%, vor allem von 0,5 bis 10 Gew.-%, insbesondere von 1 bis 5 Gew.-%, in dem Copolymerisat bzw. den zu mischenden Copolymerisaten eingebaut.

Neben den essentiell im erfindungsgemäßen Copolymerzusatz enthaltenen Monomeren können in Anteilen von 0 bis 19,9 Gew.-%, besonders in Anteilen von 0 bis 10 Gew.-% die Copolymerisate mit einer oder mehreren anderen copolymerisierbaren Verbindungen mit einer Doppelbindung aufgebaut sein. Als nicht essentiell notwendige aber brauchbare Monomere für die Herstellung des erfindungsgemäß einzusetzenden Copolymeren seien beispielhaft genannt Acrylsäure- und/oder Methacrylsäureester von $C_1$- bis $C_5$-Alkohlen, wie Methylmethacrylat, Isobutylmethacrylat, n-Butylacrylat, Isoamylmethacrylat, n-Pentylacrylat, aber auch Cyclopentylmethacrylat, Cyclohexylmethacrylat oder -acrylat, Tetrahydrofurfurylmethacrylat, mehrfach alkoxilierte Methacrylsäureester, weiter Acrylsäure, Methacrylsäure, Acrylnitril, Acrylamid, Methacrylamid, Styrol, Vinylacetat und vor allem Stickstoff-enthaltende, basische polymerisierbare Verbindungen, die insbesondere in Mengen von 0 bis 10 Gew.-% in dem Polyalkyl(meth)acrylat-Zusatz einpolymerisiert sind.

Als mögliche basische monomere Verbindungen sind solche mit tertiären Amino- oder Amidogruppen oder mit basischen heterocyklischen Gruppen zu nennen.

Monomere mit einem basischen Stickstoffatom sind die Dialkylaminoalkylester oder die Dialkylaminoalkylamide der Acryl- oder Methacryläsure, insbesondere solche mit insgesamt 7 bis 16 Kohlenstoffatomen, und entsprechende N-Alkylacrylamide oder -methacrylamide. Als Beispiele seien dazu Dimethylaminoethylacrylat oder -methacrylat, Dimethylaminopropylacrylat oder -methacrylat, Dimethylaminobutylacrylat oder -methacrylat, N-Methylacrylamid, N-Methylmethacrylamid, Dimethylaminoethylacrylamid oder -methacrylamid und solche Ester oder Amide genannt, die anstelle einer Dimethylaminogruppe eine Diethylamino-, Dipropylamino-, Dibutylamino-, Methylethylamino-, Methylbutylamino-, Morpholino- oder Piperidinogruppe enthalten. Zu geeigneten Stickstoff-haltigen Monomeren gehören weiterhin Vinylpyrrolidon, Vinylpyridin, Vinylimidazol, Vinylimidazolin, Vinylpyrazolon, Vinylpiperidin, sowie die Acryl- oder Methacrylsäureester von Imidazolyl-alkanolen oder Imidazolinyl-Alkanolen.

Zur Einarbeitung der die Homogenität und die elastische Rückstellung verbessernden Polymerkomponenten in die Bitumina, lassen sich die erfindungsgemäßen Polyalkyl(meth)acrylate in Lösung, solche vor allem in einem geeigneten Mineralöl, z.B. einem höher viskosen naphthenbasischen Schmieröl, oder gegebenenfalls in wäßriger Emulsion oder in reiner Form dem Bitumen zusetzen. Die Herstellung der erfindungsgemäß zu verwendenden Copolymeren kann daher nach den üblichen Verfahren durch vornehmlich radikalische Polymerisation der Monomeren in Lösung oder in Emulsion, aber auch in Substanz vorgenommen werden (vgl. H. Rauch-Puntigam, Th. Völker, Acryl- und Methacrylverbindunge, Springer-Verlag, Berlin 1967, insbesondere Seiten 203, 207, 230 - 233, 238, 327).

Die Molekulargewichtseinstellung, wobei Mw für die erfindungsgemäß zu verwendenden Polyalkyl(meth)-acrylate, insbesondere über $10^4$, vor allem $> 3 \times 10^4$ sein soll, wobei Werte bis ca. $1,5 \times 10^6$ erreicht werden können, wird in der Regel durch die Menge des die Polymerisation auslösenden Initiators im Verhältnis zu den polymerisierbaren Monomeren oder der Mitverwendung eines Reglers, z.B. eines Alkylmercaptans, bestimmt, und wird nach bekannten Methoden (loc.cit. H. Rauch-Puntigam) durchgeführt. Die Molekulargewichte Mw in g/mol der erhaltenen Polymerisate können nach der Methode der Lichtstreuung (Ullmanns Encyklopädie der techn. Chemie, 4. Auflage, Band 15, Seiten 385 bis 287) gemessen werden oder lassen sich nach der Eichbeziehung $n_{sp/c}$ = $0,0156 \times Mw^{0,645}$ abschätzen, wobei die Viskositäten nach DIN 7745 mit Chloroform als Lösungsmittel bei 20 Grad C gemessen werden.

Den Bitumina werden zur erfindungsgemäßen Modifizierung die Maleinsäureanhydrid-copolymerisierten Polyalkyl(meth)acrylate mit Molekulargewichten vor allem größer $10^4$ in Abhängigkeit vom PmB-Einsatzgebiet in Mengen von 0,5 bis 50 Gew.-%, vorzugsweise 0,5 bis 20 Gew.-%, vor allem von 1 bis 15 Gew.-% und insbesondere in Mengen von 2 bis 10 Gew.-% zugesetzt.

Neben den erfindungsgemäß notwendigen Maleinsäureanhydridcopolymerisierten Polyalkyl(meth)-acrylaten können die erfindungsgemäßen polymermodifizierten Bitumina andere als Veredlungskomponenten für bituminöse Bindemittel und Gemische bekannte polymere Verbindungen, wie beispielsweise Polyolefine (Polyethylen, Polypropylen), Ethylen-Vinylacetat-Copolymere oder Acrylnitril-Butadien-Styrol-Copolymere,enthalten, wobei das Gewichtsverhältnis Alkyl(meth)acrylat-Copolymer zu Nicht-Alkyl(meth)acrylat-Polymer = 1 : 0 bis 1 : 4 sein kann. Erfindungsgemäß vorteilhaft wirkt sich die Mitverwendung von Maleinsäureanhydrid-modifizierten Olefincopolymeren aus.

Die Maleinsäureanhydrid-modifizierten Alkyl(meth)acrylat-Copolymeren bringen nach ihrer Einarbeitung in Bitumenkompositionen, die durch Prüfung nach Heißlagerung bei 180 Grad C (Tubentest), erfindungsgemäße homogene PmB sind, Verbesserungen der elastischen Rückstellung in Werten von etwa 30 - 55 % nach dem Stand der Technik auf Werte bis etwa 56 - 90 %.

Unter Bitumen werden im Sinne der vorliegenden Erfindung alle z.B. im Straßenbau oder im Dachbahnenbau oder als Verguß-, Dichtungs- oder Anstrichmassen gebräuchlichen Bitumina verstanden.

In den anschließenden Beispielen ist die Herstellung von Maleinsäureanhydrid-Alkyl(meth)acrylat-Copolymeren und die Herstellung erfindungsgemäßer Bitumen-Polymer-Mischungen (PmB) und ihre ermittelten Eigenschaften, im Vergleich mit solchen ensprechend dem Stand der Technik, beschrieben.

BEISPIELE

A. Synthesen der Polymeren

1. Synthese der Maleinsäureanhydrid-Alkylmethacrylat-Copolymeren - Beispiele 1 - 7:

In einem 4 l 4-Halsrundkolben mit Säbelrührer, Rückflußkühler und Innenthermometer wurden 1000 g Isodecylmethacrylat und Maleinsäureanhydrid in den jeweiligen Gewichtsverhältnissen sowie 500 g bzw. 180 g (Beisp. 3 u. 5) naphthenbasisches Öl unter Rühren auf 75 Grad C erwärmt. Durch Einleiten von $N_2$ wurde die Lösung innerhalb einer Stunde von Sauerstoff befreit. Anschließend wurde mit 0,2 g tert.-Butylpivalat und 0,2 g tert.-Butylperbenzoat die Polymerisation gestartet. Nach einer Stunde wurde die Temperatur auf 130 Grad C erhöht und in den Beispielen 3 u. 5 mit weiteren 320 g Öl verdünnt. 5 Stunden nach Reaktionsbeginn wurde durch Zugabe von 1 g tert.-Butylperbenzoat nachpolymerisiert und weiter mit 500 g Öl verdünnt.

Die Gesamtpolymerisationsdauer betrug 16 Stunden. Man erhielt eine klare, rotbraune, viskose Lösung mit 50 Gew.-% Polymerisatgehalt. Der Umsatz war in der Regel größer als 97 %.

2. Vergleichsbeispiel 1:

Herstellung analog zu Beisp. 1, allerdings ohne Maleinsäureanhydrid.

3. Vergleichsbeispiele 2 - 3:

In einem 1l-4-Halsrundkolben mit Säbelrührer, Rückflußkühler und Innenthermometer wurden 500 g Toluol 52,8 g Methylacrylat bzw. n-Butylacrylat und 2,8 g Maleinsäureanhydrid unter Rühren auf 70 Grad C erwärmt. Nach Erreichen dieser Temperatur wurde mit 0,11 g tert.-Butylperpivalat die Reaktion gestartet. Anschließend wurden innerhalb von 3 Stunden 422,2 g Methylacrylat bzw. n-Butylacrylat, 22,2 g Maleinsäureanhydrid und 1,33 g tert.-Butylperpivalat zudosiert. 3 Stunden nach Zulaufende wurde durch Zugabe von 1,0 g tert.-Butylperpivalat nachpolymerisiert. Die Gesamtpolymerisationsdauer betrug 10 Stunden. Man erhielt eine klare, farblose, viskose Lösung mit 50 Gew.-% Polymerisatgehalt.

Durch Einengen am Rotationsverdampfer wurde das Polymere isoliert und 12 Stunden bei 70 Grad C im Vakuumtrockenschrank getrocknet.

B. Herstellung und Prüfung polymermodifizierter Bitumina

Allgemeine Vorschrift zur Herstellung polymermodifizierter Bitumina

Ein handelsübliches Normenbitumen wurde in einem Kolben mit Säbelrührer auf 150 Grad C erwärmt. Bei dieser Temperatur wurden die in Tab. 2 - 4 angegebenen Mengen des jeweiligen Additivs (50 %-ige Polymerlösung in Öl) zugegeben und 1 Stunde lang gerührt. Nach dieser Zeit war das Polymerisat jeweils vollständig eingearbeitet und das erhaltene polymermodifizierte Bitumen war homogen und glatt.

Legende zur Prüfung polymermodifizierter Bitumina:
DuK = Duktilität nach DIN 52 013
EP = Erweichungspunkt RuK nach DIN 52 011

ER =	Elast. Rückstellung nach PmB TI 89, Abschnitt 3.2.1

Homo =	Homogenität nach Heißlagerung bei 180 Grad C (Tubentest) nach PmB TL 89, Abschnitt 3.2.1

PmB TI 89 =	Technische Lieferbedingung für polymermodifiziertes Bitumen 1989

In der nachstehenden Tabelle 1 sind die hergestellten Polymeren - erfindungsgemäße und Vergleichspolymere - zusammengestellt.

Aus den Tabellen 2, 3 und 4 sind Prüfwerte von erfindungsgemäßen PmB und in Tabelle 5 Prüfwerte von solchen nach dem Stand der Technik ersichtlich.

Tabelle 1

| Polymer | Einwaage der Monomeren | Lösungsmittel | Etasp/c [mL/g] *) |
|---|---|---|---|
| Beispiel 1 | 990 g Isodecylmethacrylat / 10 g Maleinsäureanhydrid | 1000 g Öl | 81 |
| Beispiel 2 | 980 g Isodecylmethacrylat / 20 g Maleinsäureanhydrid | 1000 g Öl | 78 |
| Beispiel 3 | 980 g Isodecylmethacrylat / 20 g Maleinsäureanhydrid | 1000 g Öl | 114 **) |
| Beispiel 4 | 950 g Isodecylmethacrylat / 50 g Maleinsäureanhydrid | 1000 g Öl | 70 |
| Beispiel 5 | 950 g Isodecylmethacrylat / 50 g Maleinsäureanhydrid | 1000 g Öl | 110 **) |
| Beispiel 6 | 925 g Isodecylmethacrylat / 75 g Maleinsäureanhydrid | 1000 g Öl | 49 |
| Beispiel 7 | 900 g Isodecylmethacrylat / 100 g Maleinsäureanhydrid | 1000 g Öl | 57 |
| Vergl.-beispiel 1 | 1000 g Isodecylmethacrylat | 500 g Toluol | 91 |
| Vergl.-beispiel 2 | 475 g Methylacrylat / 25 g Maleinsäureanhydrid | 1000 g Öl | 41 |
| Vergl.-beispiel 3 | 475 g Butylacrylat / 25 g Maleinsäureanhydrid | 500 g Toluol | 46 |

*) Etasp/c wurde in Chloroform nach DIN 7745 bestimmt.

**) Die Anfangskonzentration der Monomeren betrug 90%.

Tabelle 2:    Destillationsbitumen B 80 einer deutschen Raffinerie

| Bitumen | Additivzusatz | Duk 13°C [cm] | EP RuK [°C] | ER [%] | Homo [°C] |
|---|---|---|---|---|---|
| 1000 g | - | > 150 | 48,9 | 19 | - |
| 920 g | 80 g   Beispiel 1 | > 150 | - | 65 | 1,2 |
| 940 g | 60 g   Beispiel 1 | - | - | 72 | - |
| 960 g | 40 g   Beispiel 1 | - | - | 75 | - |
| 920 g | 80 g   Beispiel 2 | > 100 | 43,8 | 68 | 1,6 |
| 940 g | 60 g   Beispiel 3 | > 150 | 44,2 | 59 | 0,4 |
| 920 g | 80 g   Beispiel 4 | > 150 | - | 56 | 0,5 |
| 940 g | 60 g   Beispiel 5 | > 150 | 45,1 | 59 | 1,3 |
| 920 g | 80 g Vergl.-Beispiel 1 | > 100 | - | 31 | 2,2 |
| 940 g | 60 g Vergl.-Beispiel 1 | > 100 | - | 26 | 1,0 |

EP 0 538 581 A1

Tabelle 3: Bitumen B 200 einer weiteren deutschen Raffinerie

| Bitumen | Additivzusatz | Duk 7°C [cm] | EP RuK [°C] | ER [%] | Homo [°C] |
|---------|---------------|--------------|-------------|--------|-----------|
| 1000 g | - | > 100 | 38,4 | 25 | - |
| 940 g | 60 g  Beispiel 3 | > 150 | - | 53 | 0,0 |
| 940 g | 60 g  Beispiel 5 | > 100 | - | 58 | 0,4 |
| 940 g | 60 g Vergl.-Beispiel 1 | > 150 | - | 36 | 0,4 |

EP 0 538 581 A1

EP 0 538 581 A1

Tabelle 4:     Bitumen B 80 einer weiteren deutschen Raffinerie

| Bitumen | Additivzusatz | Duk 13°C [cm] | EP RuK [°C] | ER [%] | Homo [°C] |
|---------|---------------|---------------|-------------|--------|-----------|
| 1000 g | - | 47 | 47,9 | 13 | - |
| 940 g | 60 g  Beispiel 5 | > 150 | 49,7 | 52 | 0,0 |
| 970 g | 30 g  Beispiel 5 (100%iges Polymerisat) | 77 | 53,1 | 53 | 0,4 |
| 940 g | 60 g Vergl.-Beispiel 1 | > 150 | - | 17 | 1,0 |

**Tabelle 5 :  Bitumen B 80 einer deutschen Raffinerie**

| Bitumen | Additivzusatz | Duk 13°C [cm] | EP RuK [°C] | ER [%] | Homo [°C] |
|---|---|---|---|---|---|
| 940 g | 60 g Vergl.-Beispiel 2 | 90 | 44,5 | 24 | 1,2 |
| 940 g | 60 g Vergl.-Beispiel 3 | > 120 | 44,0 | 25 | 2,3 |

Aus der Charakterisierung der Bitumenmischungen mit den Vergleichsbeispielen 2 und 3 (Tabelle 5) erkennt man eindeutig, daß diese sowohl in der elastischen Rückstellung als auch in der Duktilität gegenüber den erfindungsgemäßen Beispielen abfallen. Obwohl Maleinsäureanhydrid in vergleichbaren Mengen wie für die erfindungsgemäßen Beispiele als Comonomer eingesetzt wurde, werden die Eigenschaften mit Vergleichsbeispiel 1 (PAMA-Homopolymer) hergestellten Bitumenmischungen auch nicht übertroffen.

**Patentansprüche**

1. Homogenes, d.h. gegen Entmischung bei der Heißlagerung stabiles, polymermodifiziertes Bitumen mit hoher elastischer Rückstellung, guter Kälteflexibilität und hoher thermischer Stabilität, mit einem Gehalt von 0,5 bis 50 Gew.-% an Polymerbestandteilen, wobei diese Polymerbestandteile mindestens zu 20 Gew.-% Polyalkyl(meth)acrylate sind,

    dadurch gekennzeichnet,

    daß das modifizierende Polyalkyl(meth)acrylat in Anteilen von 80 bis 99,9 Gew.-% aus $C_6$- bis $C_{28}$-Alkyl(meth)acrylaten, in Anteilen von 0,1 bis 20 Gew.-% aus Maleinsäureanhydrid und in Anteilen von 0

EP 0 538 581 A1

bis 19,9 Gew.-% aus einer oder mehreren anderen polymerisierbaren Verbindungen mit nicht mehr als einer polymerisierbaren Doppelbindung, aufgebaut und in dem Bitumen gleichmäßig verteilt ist.

2. Homogenes polymermodifiziertes Bitumen nach Anspruch 1, dadurch gekennzeichnet, daß das modifizierende Polyalkyl(meth)acrylat mit 0,5 bis 10 Gew.-%, vorzugsweise mit 1 bis 5 Gew.-% Maleinsäureanhydrid als Monomerem aufgebaut ist.

3. Homogenes, polymermodifiziertes Bitumen nach den Ansprüchen 1 und 2, dadurch gekennzeichnet, daß dieses neben den Maleinsäureanhydrid-Alkyl(meth)acrylat-Copolymeren, Maleinsäureanhydrid-Olefin-Copolymere als Bitumen-modifizierende Polymere enthält.

4. Verfahren zur Herstellung von homogenem, polymermodifiziertem Bitumen mit verbesserter elastischer Rückstellung, guter Kälteflexibilität und hoher thermischer Stabilität, dadurch gekennzeichnet, daß ein 0,5 bis 50 Gew.-% Poly(meth)acrylat-haltiges Bitumen-Polymer-Gemisch durch Einarbeitung eines aus 80 bis 99,9 Gew.-% aus $C_6$- bis $C_{28}$-Alkyl(meth)acrylaten und 0,1 bis 20 Gew.-% aus Maleinsäureanhydrid und in Anteilen von 0 bis 49,8 Gew.-% aus einer oder mehreren anderen Verbindungen mit nicht mehr als einer polymerisierbaren Doppelbingung aufgebauten Polymerisates, erhalten wird.

5. Verfahren nach Anspruch 4, dadurch gekennzeichnet, daß zur Bitumenmodifizierung mit Polymeren, neben Maleinsäureanhydrid-Alkyl(meth)acrylat-Copolymerisaten nach Anspruch 1, noch weitere Polymere, insbesondere Maleinsäureanhydrid-Olefin-Copolymere mitverwendet werden.

12

Europäisches
Patentamt

**EUROPÄISCHER RECHERCHENBERICHT**

Nummer der Anmeldung

EP    92 11 4119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 400 391 (RÖHM GMBH) <br> * Ansprüche 1-4 * | 1-5 | C08L95/00 |
| D | & DE-A-3 917 815 <br> --- | | |
| Y | EP-A-0 400 437 (RÖHM GMBH) <br> * Seite 4, Zeile 29 - Zeile 31; Ansprüche 1-6 * | 1-5 | |
| D | & DE-A-3 925 287 <br> --- | | |
| Y | EP-A-0 096 614 (SOCIETÉ CHIMIQUE DES CHARBONNAGES S.A) <br> * Ansprüche 1,3 * <br> --- | 1-5 | |
| D,A | WO-A-8 704 174 (THE DOW CHEMICAL CO.) <br> ----- | 1,4 | |
| | | | **RECHERCHIERTE SACHGEBIETE (Int. Cl.5)** |
| | | | C08L |

Der vorliegende Recherchenbericht wurde für alle Patentansprüche erstellt

| Recherchenort | Abschlußdatum der Recherche | Prüfer |
|---|---|---|
| DEN HAAG | 26 JANUAR 1993 | CATURLA VICENTE V. |